# EUROPEAN PATENT SPECIFICATION

(11) **EP 1 639 285 B1**
(45) Date of publication and mention of the grant of the patent: **12.12.2007**
(21) Application number: 04742897.4
(22) Date of filing: 28.05.2004
(51) Int. Cl.: F16K 47/08, F15D 1/00, F15C 1/16

(54) **CONTROL VALVE WITH VORTEX CHAMBERS**
STEUERVENTIL MIT WIRBELKAMMERN
VANNE DE REGULATION A CHAMBRES DE TURBULENCE

(30) Priority: 30.05.2003 GB 0312331
(43) Date of publication of application: 29.03.2006
(73) Proprietor: IMI VISION LIMITED, Alcester, Warwickshire B49 6EU (GB)
(72) Inventor: GOULET, Douglas, P., Hanover, MN 55341 (US)
(74) Representative: Wightman, David Alexander
(86) International application number: PCT/GB2004/002291
(87) International publication number: WO 2004/106792

(56) References cited:
- WO-A-01/31242
- GB-A- 1 486 440
- US-A- 3 780 767
- US-A- 3 941 350

## Description

This invention relates to the control and reduction of fluid pressure in control valves, especially but not exclusively severe service valves for use in power industries.

The most widely used current technology in severe service valves utilises pressure letdown chambers consisting of one or more flow passages containing mutable orifice opening, labyrinths, or multiple abrupt angular turn passageways resulting in a staged pressure reduction. Alternatively flow restrictions can be afforded by physically reducing the flow passage area through which the fluid passes. As the fluid flows through these physical restrictions the velocity is locally increased at the restriction outlets generating turbulence which dissipates energy and reduces the pressure.

In the afore-mentioned control valves, dissipation of the energy of the flowing fluid is effected by frictional drag through smooth round passages, or by successive abrupt restrictions and expansions through tortuous passages. Some of these arrangements have noise problems associated with them, and since they rely largely on frictional losses, performance is quite susceptible to viscosity changes which are an inherent result of temperature changes. Another problem associated with these technologies is that the energy dissipated through the physical flow restrictions can result in physical damage or erosion to valve components if not controlled in a careful manner.

U.S. patents Nos. 3,941,350 and 3,780,767 disclose high resistance vortex chamber passage trims for a variable fluid restrictor control valve which offers some noise reduction. With all prior vortex chamber designs, each vortex chamber has only one outlet. In a free vortex spiral flow system, the radial velocity of the fluid increases as it reaches the exit point of the chamber. As the fluid exits the vortex chamber, radial velocity is changed into axial velocity and its pressure energy is reduced. With a single outlet, the energy difference results in turbulence. In extreme cases this will result in cavitations which are detrimental to the performance of the valve, increasing both noise and erosion. In addition, in prior vortex chamber designs the exit point is susceptible to high erosion where the spiral flow impinges on the bottom side of the exit path which provides the physical barrier that changes the radial flow back into axial flow.

PCT Application WO 01/31242 describes a valve having labyrinthine type trim which changes direction of the flowpath within the labyrinth. A vortex chamber acts to decrease the kinetic energy of the flow passing through the valve.

It is an object of the present invention to solve or at least mitigate the above-mentioned problems associated with known vortex chamber designs of control valves.

According to a first aspect of the present invention, there is provided a trim for a fluid flow control valve of the type including a plurality of vortex chambers characterised in that the fluid flows through said vortex chambers in a substantially spiral vortex fashion and each vortex chamber has at least one inlet for the fluid and at least two outlets for the fluid.

In accordance with the invention, therefore, the fluid is introduced under pressure into a vortex chamber via the inlet and, within the chamber, the fluid flow splits in two and takes a generally spiral flow path having both radial and axial components towards each of two outlets which are preferably opposed to one another. The radial velocity of the fluid increases with decreasing radius of the spiral flow path, which creates a high back pressure at the inlet of the vortex chamber and gives the dynamic effect of high fluid resistance. The dual outlets offer significant advantages over the prior art in that the exit velocity is dramatically reduced and so are less likely to reach the extreme levels which cause cavitation.

Preferably, the inlet flow is tangential to the circumferential surface of the vortex chamber, thereby initiating the radial flow path and minimising any turbulence at the point of entry of the fluid into the vortex chamber, and the outlets are positioned on, and at opposed ends of, the central axis of the chamber.

The inlet flowpath may be straight or curved. In a preferred arrangement the inlet flowpath is of reducing cross-sectional area along the length of the inlet flowpath as described in our co-pending UK patent application of even date entitled "Improvements in fluid control".

Preferably, there are just one fluid inlet and two fluid outlets associated with each vortex chamber in which case the ratio of the combined cross-sectional area of the two outlets to the cross-sectional area of the inlet is preferably about 2/1, although the ratio can be adjusted considerably to produce the desired outlet velocity of the fluid.

Preferably, the vortex chamber has the shape of a cylinder or a dual conical shape later illustrated. These shapes perform the function of directing the spiral flow towards the outlets. However, modifications to those shapes so as to minimise erosion will be apparent to those skilled in the art.

Preferably, the trim of a valve of the invention is of the stacked disc type and the vortex chambers are defined by the discs. The vortex chambers in the discs can be of varying dimensions allowing the level of resistance produced by the trim to profile the valve's performance over the entire actuation stroke of the control valve. Preferably, the vortex chambers are located radially on a disc with a central concentric hole, the fluid inlet and fluid outlets being located on, respectively, the inner and outer diameters of the disc. The discs may each consist of one or more elements placed on top of one another with different details machined on or in their surfaces to create the desired geometry of the vortex chambers and the fluid inlet and fluid outlets.

Preferably, the discs are brazed or joined together by other means to form a disc stack control element in the shape of a cylinder with a concentric bore running along its axis and a plurality of fluid inlets and fluid outlets located on the inner and outer surfaces of the disc stack. Preferably, a plug or plunger is movable in the central bore of the disc stack such that it can cover and expose a varying number of fluid flow paths with associated pressure reducing chambers thereby enabling fine control of pressure reduction.

Preferably, the outlets of the vortex chambers in a disc stack are in communication with one another. This communication allows for a further subdivision of the fluid flow up into the vortex chamber higher in the disc stack above the inlets which are exposed by the plug or plunger. Subdividing the fluid flow in this manner reduces the flow's velocity and therefore reduces the noise output. If the valve plug or plunger has lifted to its maximum lift exposing all the vortex inlets of the disc stack, the communication between vortex chambers will become an impingement point for the fluid flow passageways, reducing the communication of fluid but forming an impingement point adding further backpressure or high resistances to the flow. Lastly the communication between the outlets also removes the material in the outlet flow passageway that has the highest potential for erosion in the vortex passageway.

In a valve of the invention, two or more dual-outlet vortex chambers may be joined in series with one another, thereby forming a staged velocity control valve, with the two outlets of one vortex chamber being connected to, respectively, the inlets of two of a second series of dual-outlet vortex chambers. This pattern may then be repeated to form as many chambers in series as one desires. Furthermore by varying the ratio of cross sectional area of outlets of one series to inlets of the next it is possible to control the fluid expansion, and therefore the fluid velocity, in the outlet orifice and passageway.

In preferred arrangements, two or three stage passageways provide the majority of the control valve needs in velocity control, but single stage and more than three stage designs can easily be produced with this invention. Communication between the outlets is preferably present with both single stage and multi-stage dual vortex assemblies of the invention.

Preferably the discs in the stack all use the same dual-outlet vortex chamber design but combining two or more dual-outlet chamber designs can in some cases provide a packaging advantage and a more tailored performance of the disc stack such that the pressure reduction / plunger displacement curve of a valve can be characterised to suit a particular control requirement.

In a preferred arrangement, a combination of the dual vortex described herein is used in conjunction with a tortuous or labyrinthine flow path at the outlets and/or inlets of the vortex chambers combining the current invention with the known art. This may serve to aid noise reduction, allowing the fluid to fully expand in the labyrinth before exiting the disc.

According to a second aspect of the invention there is provided a fluid control valve as claimed in claim 22.

According to a third aspect of the invention there is provided a fluid control valve as claimed in claim 23.

Embodiments of the invention will now be described, by way of example only, with reference to the accompanying drawings in which:
**Figure 1** is a vertical section showing the construction of a control valve incorporating a stacked plate disc stack trim as common in the art;
**Figures 2 and 3** show the construction of a single dual-outlet vortex chamber of the invention;
**Figure 4** is a diagram showing the construction of outlet communication between the vortex chambers in accordance with the invention;
**Figure 5** is an exploded diagram showing the construction of a single stage dual-outlet vortex chamber disk of the invention;
**Figure 6** is an exploded diagram showing the construction of an alternative construction of a single stage dual-outlet vortex chamber in accordance with the invention;
**Figure 7** is an exploded diagram showing a stacked plate control valve trim containing a plurality of 3-stage dual-outlet vortex chamber flow passageways in accordance with the invention;
**Figure 8** is an exploded diagram showing a second construction alternative of a stacked plate control valve trim containing a plurality of 2-stage dual-outlet vortex chamber design in accordance with the invention, and
**Figure 9** is an exploded diagram showing a third construction alternative of a stacked plate control valve trim containing a polarity of 3-stage dual-outlet vortex chamber flow passageways in accordance with the invention in which the vortex chambers have been rotated to be placed perpendicular to the plane of the individual disks.

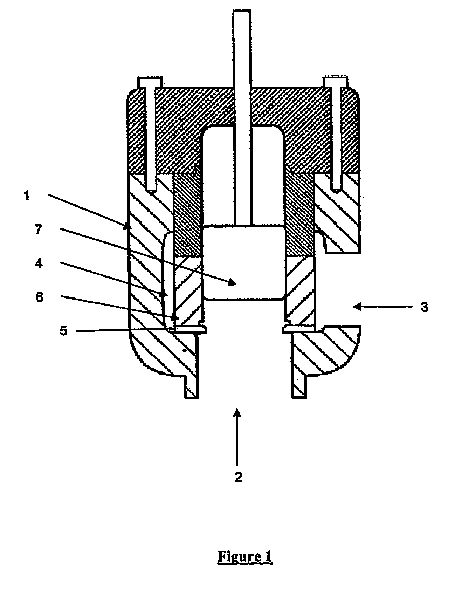

Referring to Figure 1, an example of a disk stack trim in a fluid control valve is shown as common in the art comprising of a valve body 1 with a inlet 2 and outlet 3 in fluid communication with one another via a central chamber 4 containing seat ring 5, disc stack 6 and plug 7. When the valve plug 7 sits on the valve seat ring 5 no flow is permitted to pass through the valve. As the plug 7 lifts up in a controlled movement flow is allowed to enter the valve through inlet 2, pass through the disk stack 6 which reduces the fluid pressure and out of outlet 3.

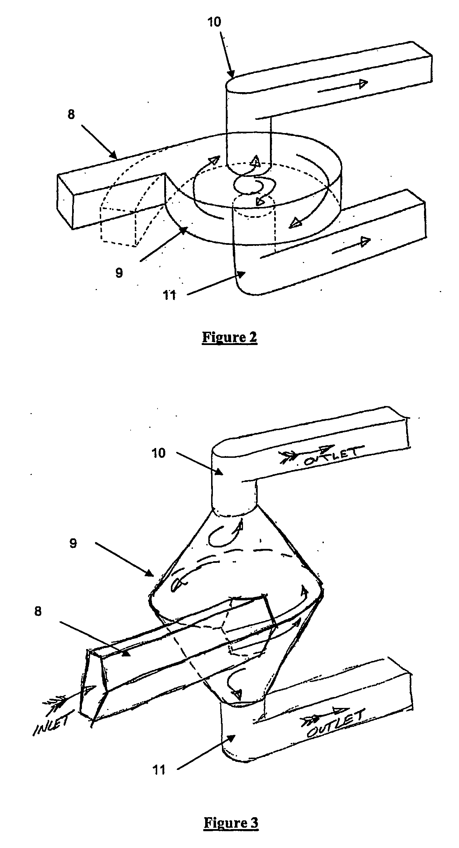

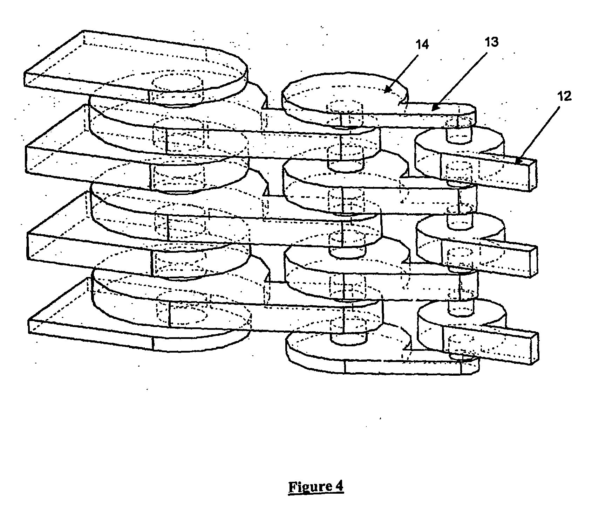

Referring to Figures 2 and 3, two embodiments of the dual-outlet vortex chamber design are shown in which the flow enters the chamber 9 through the inlet channel 8 leading substantially tangentially into the vortex chamber 9, as shown by the dashed line the inlet channel can optionally be curved. The fluid flow may undergo many revolutions in the chamber 9 before reaching outlets 10 and 11. The fluid flow in the high resistance vortex chamber fluid passage is further characterized in that the energy dissipation is due to a spiral flow within the vortex chamber as shown by the arrows. In this, as the fluid moves towards the center of the chamber, concentration of angular movement requires that its tangential velocity increases. Thus, since pressure head is dependent upon velocity head, a pressure distribution exists. More particularly, the flow field of the vortex creates a pressure drop across the chamber between the inlet and outlets, and in effect, creates a high backpressure at the inlet of the vortex chamber. This backpressure controls the total flow through the chamber, so by adding two outlets 11 and 12 to the chamber the total velocity of the fluid exiting the outlets 11 and 12 is reduced. Figure 2 shows a chamber design comprised of a cylinder shaped chamber, and Figure 3 shows a chamber design compromised of a dual-conical shaped chamber.

Referring to Figure 4, a diagram of the dual-outlet vortex chambers in a 3-stage series is shown indicating the fluid path communication between the outlets of adjacent chambers. Fluid flow enters the first stage vortex chamber inlets 12, and must pass through each first chamber before reaching the dual-outlets (Figure 2, parts 10, 11). Once the flow enters an outlet its flow can take one of two directions, firstly it can pass into the inlet 13 of the second stage vortex chamber 14 or, when only part of the stack is exposed to the inlet flow, it can pass through an unused first stage vortex chamber and separate the flow into several of the unused second stage vortex chamber inlets. By this means of allowing flow to subdivide between the unused chambers we reduced the total noise output as a result of reduced velocity within these subdivided flows. Further, the communication between two used chambers acts as a virtual barrier in place of a physical barrier to direct the fluid flow into the inlet of the next stage vortex chamber. By having no physical barrier here we have removed a focal point of erosion if the fluid flow has solid particles suspended in the flow.

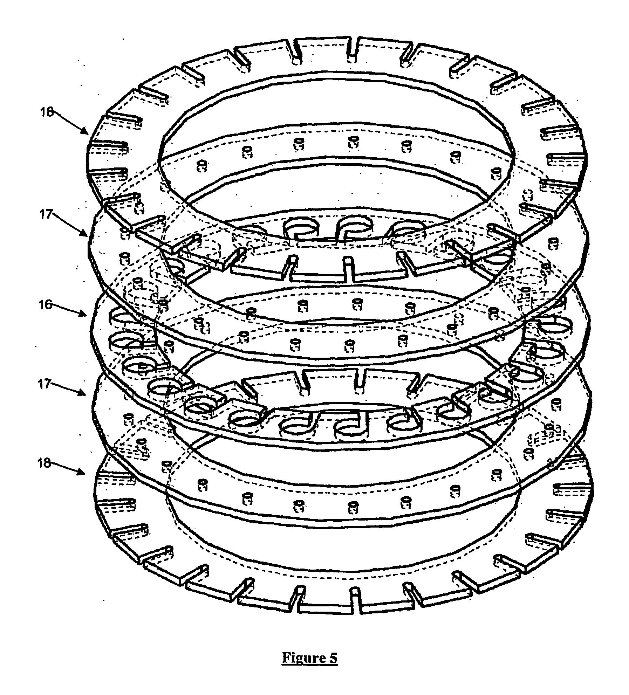

Referring to Figures 2 and 5, an exploded view of a possible construction of a single stage cylindrical dual-outlet vortex chamber is shown in which the construction is made of a number of individual elements, all producible using simple machining or stamping operations. The first element 16 contains the inlet path 8 and the cylindrical chamber 9. The second elements 17 contain an exit hole through for the fluid to exit the chamber and the third elements 18 contain the fluid outlet 10 and 11. It will be appreciated that as a stand alone chamber an additional piece (not shown) above and below the three elements shown would be required to enclose the chamber outlet paths. The elements are joined together to form the single stage dual-outlet vortex chamber.

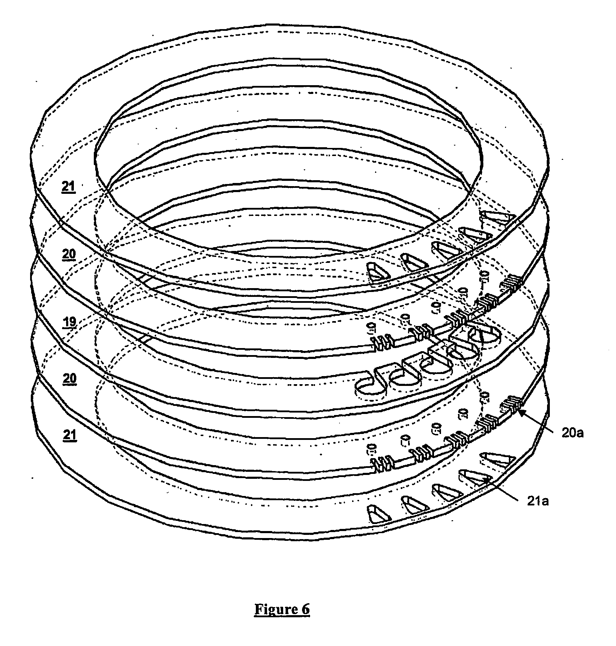

Referring to Figures 2 and 6, an exploded view of an alternative design is shown with additional subdividing of the outlet flow path to reduce noise emission. The first element 19 contains the fluid inlet 8 leading to the cylindrical chamber 9. The second elements 20 contain a hole through for the fluid to exit the chamber and subdivided exit ports 20a for the flow path. The third elements 21 contain the intermediary fluid outlet 21a to pass flow from the exit hole to the subdivided exit ports. It will be appreciated that as a stand alone chamber an additional piece (not shown) above and below the three elements shown would be required to enclose the chambers outlet paths. The elements are joined together to form the single disk.

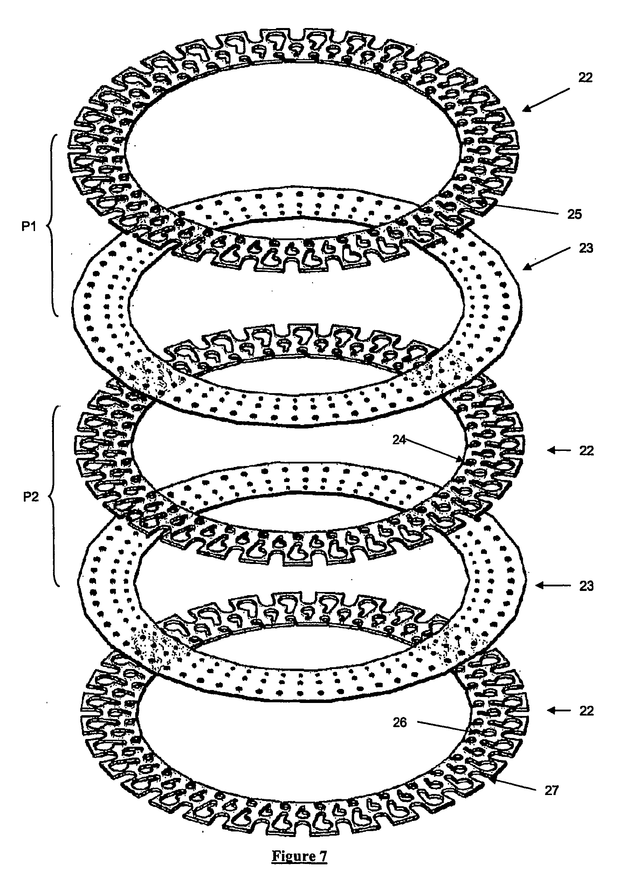

Referring to Figure 7, an exploded view of a possible construction of a 3-stage dual-outlet vortex chamber passageway is shown in which the construction is made of a number of individual elements, all producible using simple machining or stamping operations. The first element 22 contains an array of vortex chambers with associated inlet paths. The inner ring of vortex chambers form the first stage inlet and cylindrical vortex chambers 24, outlets of which communicate with the second stage 26 of vortex chambers via passages through disc 23. Outlets of these second stage vortex chambers communicate to the inlets of the third stage vortexes 25, again through passageways in disc 23. The outlets of the third stage vortex chambers communicate with the disc outlets 27, again via passageways in disk 23. The first and third stage vortexes are grouped on a common radial line (group 1) and the second stage vortex and outlet are grouped on a second common radial line (group 2) spaced equally midpoint between adjacent group 1's. As the disk stack is assembled alternating plate element 22 and 23, with plates 22 and 23 forming aligned plate pairs P1, P2 and adjacent pairs P1, P2 will be indexed one pattern grouping to place group 1's of one pair in line with group 2 of the pair below. It will be appreciated that an additional piece (not shown) will be required on the completed disk capping of the top and bottom. The elements are joined together to form the completed control valve trim stack.

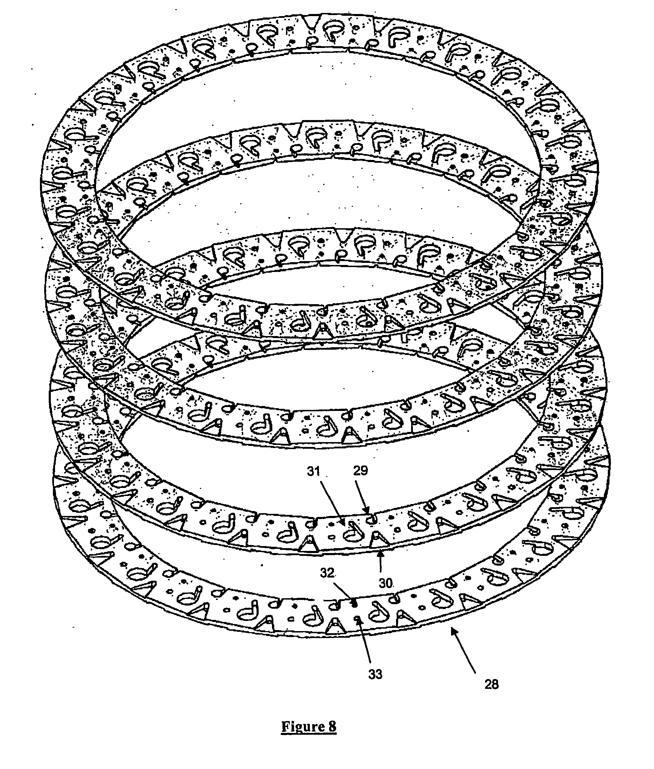

Referring to Figure 8, an exploded view of a possible construction of a 2-stage dual-outlet vortex chamber passageway is shown in which the construction is made of a plurality of single element 28. This element 28 contains an alternating pattern of three groupings. The first grouping has the bottom half of the first stage inlet and dual-conical vortex chamber 29 plus the exit through hole and exit flow path 30. The Second grouping has second stage inlet and cylindrical vortex chamber 31. And the third grouping has top half of the first stage inlet and dual-conical vortex chamber 32 plus the exit through hole and exit flow path 33. As the disk stack is assembled plate element 28 will be indexed one pattern grouping to place grouping one in line with grouping two of the element 28 below and grouping two inline with grouping three of the element 28 below and so on. It will be appreciated that an additional piece (not shown) will be required on the completed disk capping of the top and bottom. The elements are all joined together to form the completed control valve trim stack.

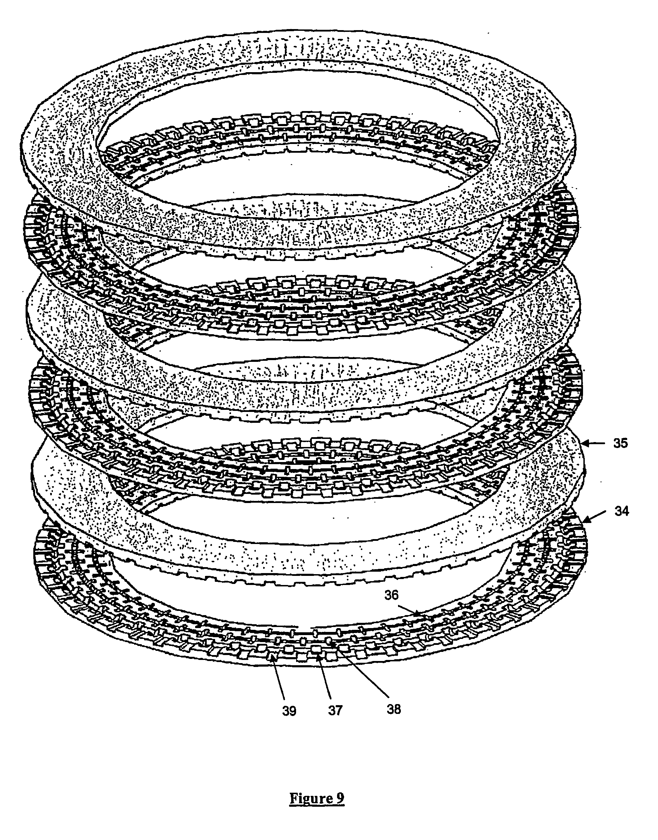

Referring to Figure 9, an exploded view of a possible construction of a 3-stage dual-outlet vortex chamber passageway shown in which the construction is made of a number of individual elements. In this design the communication between dual-outlet vortex chambers is restrained to a single disk comprising of two plates, no communication is allowed between disks. The first element 34 contains an alternating pattern of two groupings. First grouping has the first stage inlet and bottom half of the horizontally orientated first stage cylindrical vortex chamber 36 plus third stage inlet and bottom half of the horizontally orientated third stage cylindrical vortex chamber 37. The second grouping is second stage inlet and horizontally orientated second stage cylindrical vortex chamber 38 plus bottom half of exit path 39. The second element 35 contains an alternating pattern of two groupings also. First grouping has the top half of the horizontally orientated first stage cylindrical vortex chamber 36 plus top half of the horizontally orientated third stage cylindrical vortex chamber 37. The second grouping is top half of the horizontally orientated second stage cylindrical vortex chamber 38 plus top half of exit path 39. As the disk stack is assembled plate element 34 and 35 must be aligned to match grouping one to one between the two elements. It will be appreciated that an additional piece (not shown) will be required on the completed disk capping off the top and bottom. The elements are all joined together to form the completed control valve trim stack.

## Claims

1. A trim (6) for a fluid flow control valve of the type including a plurality of vortex chambers (9) wherein the fluid flows through said vortex chambers in a substantially spiral vortex fashion, and wherein each vortex chamber has at least one inlet (8) for the fluid **characterised in that** each vortex chamber has at least two outlets (10,11) for the fluid.

2. A trim for a fluid flow control valve according to claim 1 wherein each vortex chamber is arranged so that fluid introduced under pressure into the chamber via the inlet splits in two within the vortex chamber and takes a generally spiral flow path having both radial and axial components towards each of two outlets.

3. A trim for a fluid flow control valve according to claim 2 wherein the radial velocity of the fluid increases with decreasing radius of the spiral flow path which creates a high back pressure at the inlet of the vortex chamber and gives the dynamic effect of high fluid resistance.

4. A trim for a fluid flow control valve according to any one of the preceding claims wherein each vortex chamber has two outlets opposed to one another.

5. A trim for a fluid flow control valve according to claim 4 wherein the inlet flow is substantially tangential to the circumferential surface of the vortex chamber, thereby initiating the radial flow path and minimising any turbulence at the point of entry of the fluid into the vortex chamber.

6. A trim for a fluid flow control valve according to claim 4 or claim 5 wherein the outlets are positioned on, and at opposed ends of, a central axis of the chamber.

7. A trim for a fluid flow control valve according to any one of the preceding claims wherein each vortex chamber has one fluid inlet and two fluid outlets.

8. A trim for a fluid flow control valve according to claim 7 wherein the ratio of the combined cross-sectional area of the two outlets to the cross-sectional area of the inlet is about 2/1.

9. A trim for a fluid flow control valve according to any one of the preceding claims wherein each vortex chamber has the shape of a cylinder.

10. A trim for a fluid flow control valve according to any one of claims 1 to 8 wherein each vortex chamber has a dual conical shape.

11. A trim for a fluid flow control valve according to any one of the preceding claims wherein the trim is of the stacked disc type and the vortex chambers are defined by the discs (16, 17, 18).

12. A trim for a fluid flow control valve according to claim 11 wherein the vortex chambers in the discs can be of varying dimensions allowing the level of resistance produced by the trim to profile the valve's performance over the entire actuation stroke of the control valve.

13. A trim for a fluid flow control valve according to claim 11 or claim 12 wherein the vortex chambers are located radially on a disc with a central concentric hole, the fluid inlet and fluid outlets being located on, respectively, the inner and outer diameters of the disc.

14. A trim for a fluid flow control valve according to any one of claims 11 to 13 wherein the discs each consist of one or more elements placed on top of one another with different details on or in their surfaces to create the desired geometry of the vortex chambers and the fluid inlet and fluid outlets.

15. A trim for a fluid flow control valve according to any one of claims 11 to 14 wherein the discs are joined together to form a disc stack control element in the shape of a cylinder with a concentric bore running along its axis and a plurality of fluid inlets and fluid outlets located on the inner and outer surfaces of the disc stack.

16. A trim for a fluid flow control valve according to claim 15 wherein the outlets of the vortex chambers in the disc stack are in communication with one another.

17. A trim for a fluid flow control valve according to any one of claims 15 or claim 16 wherein two or more dual-outlet vortex chambers are joined in series with one another, thereby forming a staged velocity control valve, with the two outlets of one vortex chamber being connected to, respectively, the inlets of two of a second series of dual-outlet vortex chambers.

18. A trim for a fluid flow control valve according to any one of claims 15 to 17 wherein the discs in the stack all use the same dual-outlet vortex chamber design.

19. A trim for a fluid flow control valve according to any one of the preceding claims wherein pressure reduction means is provided at the outlets and/or inlets of the vortex chambers.

20. A trim for a fluid flow control valve according to any one of the preceding claims wherein labyrinthine or like passageways are provided at the outlets and/or inlets of the vortex chambers.

21. A trim for a fluid flow control valve according to any of the preceding claims in which the inlet flowpath to the vortex chamber is curved.

22. A fluid flow control valve, comprising a trim according to any one of claims 1 to 21.

23. A fluid flow control valve comprising a trim according to claim 15 wherein a plug or plunger (7) is movable in the central bore of the disc stack (6) such that it can cover and expose a varying number of fluid flow paths with associated pressure reducing chambers thereby enabling fine control of pressure reduction.

## Patentansprüche

1. Innenteil (6) für ein Strömungssteuerventil eines Mediums des Typs, welcher eine Vielzahl von Wirbelkammern (9) einschließt, wobei das Medium durch die Wirbelkammer in einem im Wesentlichen spiralförmigen Wirbel fließt und wobei jede Wirbelkammer mindestens einen Einlass (8) für das Medium aufweist, **dadurch gekennzeichnet, dass** jede Wirbelkammer mindestens zwei Auslässe (10, 11) für das Medium aufweist.

2. Innenteil für ein Strömungssteuerventil eines Mediums nach Anspruch 1, wobei jede Wirbelkammer derart angeordnet ist, dass das unter Druck in die Kammer über den Einlass eingeführte Medium innerhalb der Wirbelkammer in zwei Teile aufgeteilt wird und einen im Wesentlichen spiralförmigen Strömungsweg einnimmt, welcher sowohl radiale als auch axiale Komponenten in Richtung jedes der beiden Auslässe aufweist.

3. Innenteil für ein Strömungssteuerventil eines Mediums nach Anspruch 2, wobei die Radialgeschwindigkeit des Mediums mit abnehmendem Radius des spiralförmigen Strömungswegs zunimmt, wodurch ein hoher Rückstaudruck am Einlass der Wirbelkammer erzeugt wird und was den dynamischen Effekt eines hohen Strömungswiderstands ergibt.

4. Innenteil für ein Strömungssteuerventil eines Mediums nach einem der vorstehenden Ansprüche, wobei jede Wirbelkammer zwei einander gegenüberliegende Auslässe aufweist.

5. Innenteil für ein Strömungssteuerventil eines Mediums nach Anspruch 4, wobei die Einlassströmung im Wesentlichen tangential zur Umfangsoberfläche der Wirbelkammer ist und **dadurch** der radiale Strömungsweg ausgelöst wird und jegliche Turbulenz am Eingangspunkt des Mediums in die Wirbelkammer minimiert wird.

6. Innenteil für ein Strömungssteuerventil eines Mediums nach Anspruch 4 oder 5, wobei die Auslässe auf und an einander gegenüberliegenden Enden einer Mittelachse der Kammer angeordnet sind.

7. Innenteil für ein Strömungssteuerventil eines Mediums nach einem der vorstehenden Ansprüche, wobei jede Wirbelkammer einen Medieneinlass und zwei Medienauslässe aufweist.

8. Innenteil für ein Strömungssteuerventil eines Mediums nach Anspruch 7, wobei das Verhältnis der kombinierten Querschnittsfläche der beiden Auslässe zur Querschnittsfläche des Einlasses etwa 2/1 beträgt.

9. Innenteil für ein Strömungssteuerventil eines Mediums nach einem der vorstehenden Ansprüche, wobei jede Wirbelkammer die Form eines Zylinders aufweist.

10. Innenteil für ein Strömungssteuerventil eines Mediums nach einem der vorstehenden Ansprüche 1 bis 8, wobei jede Wirbelkammer eine doppelkonusförmige Gestalt aufweist.

11. Innenteil für ein Strömungssteuerventil eines Mediums nach einem der vorstehenden Ansprüche, wobei das Innenteil vom Typ gestapelter Scheiben ist und die Wirbelkammern durch die Scheiben (16, 17, 18) gebildet werden.

12. Innenteil für ein Strömungssteuerventil eines Mediums nach Anspruch 11, wobei die Wirbelkammern in den Scheiben unterschiedliche Abmessungen aufweisen, so dass der Grad des Widerstands, der durch das Innenteil erzeugt wird, an das Profil der Leistung des Ventils über den gesamten Betätigungshub des Steuerventils angepasst werden kann.

13. Innenteil für ein Strömungssteuerventil eines Mediums nach Anspruch 11 oder 12, wobei die Wirbelkammern radial auf einer Scheibe mit einem zentralen konzentrischen Loch angeordnet sind und der Medieneinlass bzw. die Medienauslässe an den inneren und äußeren Durchmessern der Scheibe angeordnet sind.

14. Innenteil für ein Strömungssteuerventil eines Mediums nach einem der Ansprüche 11 bis 13, wobei die Scheiben je aus einem oder mehreren Elementen bestehen, die übereinander angeordnet sind, wobei unterschiedliche Einzelheiten auf oder in ihren Oberflächen vorgesehen sind, um die gewünschte Geometrie der Wirbelkammern und des Medieneinlasses und der Medienauslässe zu erzeugen.

15. Innenteil für ein Strömungssteuerventil eines Mediums nach einem der vorstehenden Ansprüche 11 bis 14, wobei die Scheiben miteinander verbunden sind, um ein durch den Scheibenstapel gebildetes Steuerelement in Form eines Zylinders zu bilden, wobei eine konzentrische Bohrung längs dessen Achse verläuft und eine Vielzahl von Flüssigkeitseinlässen und Flüssigkeitsauslässen an den inneren und äußeren Oberflächen des Scheibenstapels angeordnet sind.

16. Innenteil für ein Strömungssteuerventil eines Mediums nach Anspruch 15, wobei die Auslässe der Wirbelkammern in dem Scheibenstapel miteinander in Verbindung stehen.

17. Innenteil für ein Strömungssteuerventil eines Mediums nach einem der Ansprüche 15 oder 16, wobei zwei oder mehr mit zwei Auslässen versehene Wirbelkammern in Reihe miteinander verbunden sind und **dadurch** ein Steuerventil mit abgestufter Geschwindigkeit bilden, wobei die beiden Auslässe der einen Wirbelkammern entsprechend mit den Einlässen von zwei einer zweiten Reihe von Wirbelkammern mit zwei Auslässen verbunden sind.

18. Innenteil für ein Strömungssteuerventil eines Mediums nach einem der Ansprüche 15 bis 17, wobei die Scheiben in dem Stapel sämtlich das gleiche Wirbelkammerdesign mit zwei Auslässen aufweisen.

19. Innenteil für ein Strömungssteuerventil eines Mediums nach einem der vorstehenden Ansprüche, wobei ein Druckverringerungsmittel an den Auslässen und/oder Einlässen der Wirbelkammern vorgesehen ist.

20. Innenteil für ein Strömungssteuerventil eines Mediums nach einem der vorstehenden Ansprüche, wobei labyrinthartige oder ähnliche Durchlässe an den Auslässen und/oder Einlässen der Wirbelkammern vorgesehen sind.

21. Innenteil für ein Strömungssteuerventil eines Mediums nach einem der vorstehenden Ansprüche, wobei der Einlassströmungspfad zur Wirbelkammer gekrümmt ist.

22. Strömungssteuerventil eines Mediums, umfassend einen Innenteil nach einem der Ansprüche 1 bis 21.

23. Strömungssteuerventil, umfassend einen Innenteil nach Anspruch 15, wobei ein Stopfen oder Kolben (7) in der zentralen Bohrung des Scheibenstapels (6) beweglich ist, derart, dass er eine unterschiedliche Zahl von Strömungswegen zu dazugehörigen Druckverringerungskammern abdecken oder freilegen kann, so dass eine feine Steuerung der Druckverringerung möglich ist.

## Revendications

1. Garniture pour une vanne de commande d'écoulement de fluide du type comprenant plusieurs chambres de turbulence (9), où le fluide s'écoule à travers lesdites chambres de turbulence à la manière d'un tourbillon sensiblement en spirale, et où chaque chambre de turbulence présente au moins une entrée (8) pour le fluide, **caractérisée en ce que** chaque chambre de turbulence présente au moins deux sorties (10,11) pour le fluide.

2. Garniture pour une vanne de commande d'écoulement de fluide selon la revendication 1, où chaque chambre de turbulence est agencée de façon que le fluide introduit sous pression dans la chambre par l'entrée se divise en deux dans la chambre de turbulence et prend un chemin d'écoulement généralement en spirale ayant à la fois des composantes radiales et axiales vers chacune des deux sorties.

3. Garniture pour une vanne de commande d'écoulement de fluide selon la revendication 2, où la vitesse radiale du fluide augmente au fur et à mesure que diminue le rayon du chemin d'écoulement en spirale qui crée une forte pression arrière à l'entrée de la chambre de turbulence et donne l'effet dynamique d'une résistance élevée au fluide.

4. Garniture pour une vanne de commande d'écoulement de fluide selon l'une des revendications précédentes, où chaque chambre de turbulence présente deux sorties opposées l'une à l'autre.

5. Garniture pour une vanne de commande d'écoulement de fluide selon la revendication 4, où l'écoulement d'entrée est sensiblement tangentiel à la surface circonférentielle de la chambre de turbulence en initiant ainsi le chemin d'écoulement radial et en réduisant à un minimum toute turbulence au point d'entrée du fluide dans la chambre de turbulence.

6. Garniture pour une vanne de commande d'écoulement de fluide selon la revendication 4 ou la revendication 5, où les sorties sont positionnées sur, et aux extrémités opposées d'un axe central de la chambre.

7. Garniture pour une vanne de commande d'écoulement de fluide selon l'une des revendications précédentes, où chaque chambre de turbulence présente une entrée de fluide et deux sorties de fluide.

8. Garniture pour une vanne de commande d'écoulement de fluide selon la revendication 7, où le rapport de la zone combinée en section transversale des deux sorties à la zone en section transversale de l'entrée est d'environ 2/1.

9. Garniture pour une vanne de commande d'écoulement de fluide selon l'une des revendications précédentes, où chaque chambre de turbulence a la forme d'un cylindre.

10. Garniture pour une vanne de commande d'écoulement de fluide selon l'une des revendications 1 à 8, où chaque chambre de turbulence a une forme conique double.

11. Garniture pour une vanne de commande d'écoulement de fluide selon l'une des revendications précédentes, où la garniture est du type à disques empilés, et les chambres de turbulence sont définies par les disques (16, 17, 18).

12. Garniture pour une vanne de commande d'écoulement de fluide selon la revendication 11, où les chambres de turbulence dans les disques peuvent avoir diverses dimensions permettant au niveau de résistance produit par la garniture de profiler la performance de la vanne sur toute la course d'actionnement de la vanne de commande.

13. Garniture pour une vanne de commande d'écoulement de fluide selon la revendication 11 ou la revendication 12, où les chambres de turbulence sont situées radialement sur un disque avec un trou concentrique central, l'entrée de fluide et les sorties de fluide se situant respectivement sur les diamètres intérieur et extérieur du disque.

14. Garniture pour une vanne de commande d'écoulement de fluide selon l'une des revendications 11 à 13, où les disques sont constitués chacun d'un ou de plusieurs éléments placés les uns au-dessus des autres avec des détails différents sur ou dans leurs surfaces pour créer la géométrie souhaitée des chambres de turbulence et de l'entrée de fluide et des sorties de fluide.

15. Garniture pour une vanne de commande d'écoulement de fluide selon l'une des revendications 11 à 14, où les disques sont assemblés pour former un élément de commande de pile de disques sous la forme d'un cylindre, un perçage concentrique s'étendant le long de son axe, et plusieurs entrées de fluide et sorties de fluide situées sur les surfaces intérieure et extérieure de la pile de disques.

16. Garniture pour une vanne de commande d'écoulement de fluide selon la revendication 15, où les sorties des chambres de turbulence dans la pile de disques communiquent l'une avec l'autre.

17. Garniture pour une vanne de commande d'écoulement de fluide selon l'une des revendications 15 ou 16, où deux ou plusieurs chambres de turbulence à sortie double sont reliées en série les unes aux autres en formant ainsi une vanne de commande à vitesse étagée, les deux sorties d'une chambre de turbulence étant reliées respectivement aux entrées de deux d'une seconde série de chambres de turbulence à sortie double.

18. Garniture pour une vanne de commande d'écoulement de fluide selon l'une des revendications 15 à 17, où les disques dans la pile utilisent tous la même conception de chambre de turbulence à sortie double.

19. Garniture pour une vanne de commande d'écoulement de fluide selon l'une des revendications précédentes, où un moyen réducteur de pression est prévu aux sorties et/ou entrées des chambres de turbulence.

20. Garniture pour une vanne de commande d'écoulement de fluide selon l'une des revendications précédentes, où des passages de labyrinthe ou analogue sont réalisés aux sorties et/ou entrées des chambres de turbulence.

21. Garniture pour une vanne de commande d'écoulement de fluide selon l'une des revendications précédentes, où le chemin d'écoulement d'admission à la chambre de turbulence est courbé.

22. Vanne de commande d'écoulement de fluide, comprenant une garniture selon l'une des revendications 1 à 21.

23. Vanne de commande d'écoulement de fluide comprenant une garniture selon la revendication 15, où un bouchon ou plongeur (7) est déplaçable dans le perçage central de la pile de disques (6) de sorte qu'il peut couvrir et exposer un nombre variable de chemins d'écoulement de fluide avec des chambres de réduction de pression associées en permettant ainsi une commande fine de la réduction de pression.
